Europäisches Patentamt

European Patent Office

Office européen des brevets

(11) Publication number: **0 313 226**
**A1**

# EUROPEAN PATENT APPLICATION

(21) Application number: 88309045.8

(22) Date of filing: 29.09.88

(51) Int. Cl.4: **B01D 13/00** , **A23C 21/00**

(30) Priority: 30.09.87 AU 4654/87

(43) Date of publication of application:
26.04.89 Bulletin 89/17

(84) Designated Contracting States:
AT BE CH DE ES FR GB GR IT LI LU NL SE

(71) Applicant: SYRINX EQUIPMENT PTY. LIMITED
Level 66, MLC Centre
Sydney New South Wales(AU)

(72) Inventor: Lefebvre, Michel Serge Maxime
2/6 Buckhurst Avenue
Point Piper New South Wales(AU)

(74) Representative: Pennant, Pyers et al
Stevens, Hewlett & Perkins 5 Quality Court
Chancery Lane
London, WC2A 1HZ(GB)

(54) Membrane separation process.

(57) A process for the fractionation and concentration of molecular species from a solution, and apparatus suitable for such process, whereby the solution is concentrated by a pressure-driven membrane process (e.g., reverse osmosis) and fractionated by a concentration-driven membrane process (e.g., counter diffusion or dialysis) in a closed loop arrangement, to provide a concentrate of at least one molecular species from the solution.

EP 0 313 226 A1

Xerox Copy Centre

## MEMBRANE SEPARATION PROCESS

TECHNICAL FIELD

The present invention relates to an improved membrane separation system comprising a synergistic combination of known membrane separation processes.

BACKGROUND ART

The use of membrane processes to fractionate and concentrate liquids is well known. Concentration driven processes, such as dialysis and counter diffusion, rely on osmotic pressure differences and diffusional forces to separate molecular species from a liquid stream in counter current against a stripping solvent, usually water. The molecular species in the liquid stream are separated, with some of the smaller molecules passing through the membrane into the counter current water and with the bulk of the larger molecules being retained in the liquid stream which is also diluted by water entering from the counter current water stream.

Pressure driven processes such as reverse osmosis (RO) and nanofiltration (viz hyperfiltration or leaky reverse osmosis) rely on permeation of solvent through the membrane matrix by site to site transport resulting in a concentration of the stream being treated. As such, reverse osmosis is the equivalent of concentration.

The separation of molecular species from solution, and the concentration thereof can be achieved by the separate use of a concentration driven process such as counter diffusion (CD) or dialysis, followed by the use of pressure driven membrane separation process means such as reverse osmosis.

DISCLOSURE OF THE INVENTION

It is an object of the present invention to provide means for both increasing the separation efficiency and the level of concentration of the separated species.

It is also an object of the present invention to provide a membrane separation process comprising a combination of at least two membrane separation systems whereby the separation capacity achieved and/or the efficiency of separation obtained is greater than that which can be obtained by separate sequential uses of the said separation systems.

It is another object of the present invention to provide a membrane separation system comprising a combination of at least two distinct membrane separation processes wherein each separation process mutually enhances the separation efficiency and/or capacity of the other separation process.

It is a further object of this invention to provide a membrane separation system comprising a combination of pressure driven process means such as reverse osmosis, nanofiltration or ultrafiltration with concentration driven process means such as counter diffusion or dialysis in closed loop relationship wherein in use each separation means enhances the separation efficiency and/or capacity of the other separation means.

It is yet another object of this invention to provide a membrane separation process comprising a combination of distinct membrane separation means whereby the quantity of water to be added to the process and/or the effluent produced as a by-product of the process is reduced.

This is important where usable water is not readily available and where pollution control measures are expensive.

These and other objects of the invention will be apparent from the following description of the invention.

According to one aspect of the present invention there is provided a process for the fractionation and concentration of molecular species from a solution containing two or more dissolved molecular species of different molecular weight, wherein said solution is concentrated by a pressure-driven membrane process and fractionated by a concentration-driven membrane process, said pressure-driven membrane process and said concentration-driven membrane process being operated simultaneously in a closed loop relationship, to provide a concentrate of at least one molecular species from the solution.

According to a further aspect of the invention there is provided apparatus for the fractionation and concentration of molecular species contained in a solution, comprising pressure-driven membrane separation means linked to concentration-driven membrane separation means in closed loop relationship.

According to another aspect of the present invention there is provided a process for the treatment of whey to recover usuable products therefrom, comprising ultrafiltration of said whey and recovery of the permeate therefrom, reverse osmosis and counter diffusion of the whey permeate in a closed loop system to produce desalted whey concentrate, and the drying of the desalted whey concentrate by evaporation to produce whey powder.


## BEST MODE FOR CARRYING OUT THE INVENTION

Although the invention is generally applicable to the separation of two or more species from a solution containing such species, the invention will be described with reference to the separation of salts from whey, produced as a by-product of the dairy industry, for more economical utilization thereof.

The main by-product of cheese manufacture is whey, a solution comprising proteins, sugars and salts. Less than 10% of the world's cheese whey is treated (e.g., by ultrafiltration) to recover proteins therefrom; most of the remaining 90% is dumped.

Currently the high salt content of whey powder inhibits widespread utilisation of this valuable food product. Counter diffusion separation provides the means for reducing the salt content of the whey. Desalted whole whey powder contains protein, lactose and some salt and can be used for baby food and the production of infant formulae as well as in baked goods.

Ultrafiltration (UF) is used by some cheese producers to recover the protein from whey. The UF permeate comprises water, lactose and salts and has a high BOD level; it is therefore difficult to dispose of in many cases. Over 90% of the world's UF permeate is currently being dumped (sometimes at a cost) because until recently no inexpensive or efficient technology has been available to transform the permeate into a saleable product. Counter diffusion is a process which is potentially very useful in this area, and the present invention significantly enhances the efficiency of the counter diffusion process, as will be outlined below.

Whey UF permeate contains valuable nutrients. However, the high level of salts reduces the potential uses of the permeate due to the salty taste and the high sodium content.

The desalting of the permeate allows conversion of the effluent stream - which has either no value or a negative value (due to effluent treatment or disposal costs) - into a stream which can be converted into products which have a high value.

Counter diffusion (CD) can be used to desalt the permeate so that a high-lactose, low-salt liquid can be obtained. This stream can be dried using reverse osmosis (RO) or leaky reverse osmosis and traditional evaporation techniques to produce a powder which contains about 91% lactose which can be used in baby foods, or converted by enzymatic hydrolysis to produce a glucose and galactose syrup which can be used to replace sucrose as a sweetener in the dairy industry, and other applications.

It has now been found that the efficiency of both the CD and RO processes can be significantly enhanced by the synergistic combination of both processes into a closed loop system, the result of the combination being greatly superior to separate sequential CD and RO treatments.

In the example of treatment of a stream of whey UF permeate by CD and RO units in a closed loop system, the removal of salt by the CD unit lowers the osmotic pressure of the liquid leading to the RO unit. As the flux of solute through the RO unit is proportional to the difference between the pressure drop across the RO membrane and the osmotic pressure of the liquid stream entering the RO unit, the lowering of the osmotic pressure of this liquid stream means that the flux through the RO unit increases.

$$J_s \alpha \Delta P - \Delta \pi$$

$J_s$ = Solute flux

$\Delta P$ = Pressure difference across membrane

$\Delta \pi$ = Osmotic pressure difference.

On the other hand, the desalting efficiency of the counter diffusion unit is directly proportional to the concentration gradient across the CD membrane (of the species to be removed from solution) - i.e., the desalting capacity of the CD unit is proportional to the concentration gradient of salt through the CD membrane.

Thus in a closed loop circuit containing both counter diffusion means and reverse osmosis means, the CD means removes part of the salt from the stream being treated, while water is added to the stream from the CD water counter current flow. The effect is to reduce the osmotic pressure of the stream being treated as it enters the RO means resulting in an increase of capacity through the RO means, with a higher degree of concentration i.e., the RO treated stream is at higher brix. As a consequence of this the dragging force for the CD unit is greater and thus the osmotic pressure difference between the two sides of the CD membrane - which is linked to concentration of lactose in this case - is greater. This results in a higher capacity for the CD unit. And because of the increase in the osmotic pressure gradient across the CD membrane, the better the separation achieved by the CD unit - i.e. the greater the osmotic pressure difference, the better the separation.

In this particular application, the capacity of both the CD unit and the RO unit, in closed loop arrangement, were increased by approximately 60%.

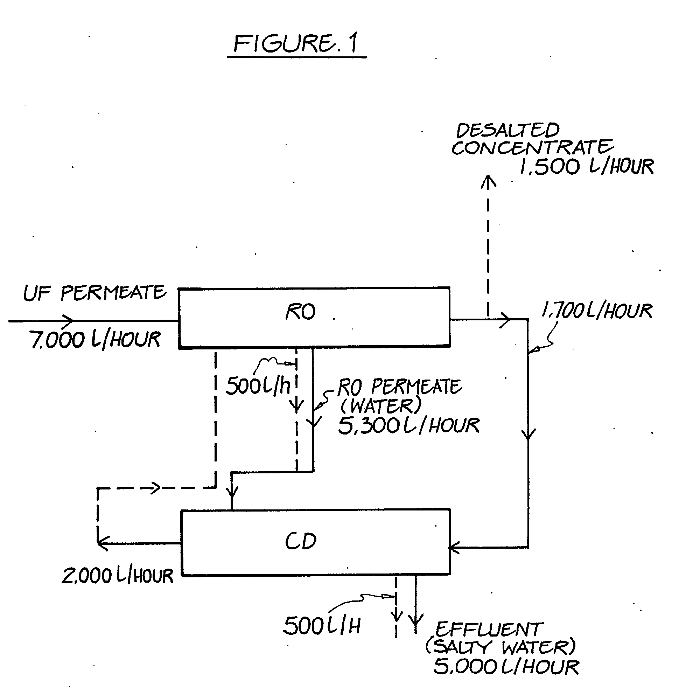

Consider an example of the treatment of the ultrafiltration (UF) permeate of dairy whey by a closed loop system comprising a combination of reverse osmosis (RO) and counter diffusion (CD) separation means. As shown in Fig. 1, a stream of dairy whey UF permeate (7,000 l/hour) enters the RO unit. A concentrated stream of the UF permeate (1,700 l/hour) and 5,300 l/hour of RO permeate (water) are produced. The concentrated UF permeate is then passed through a CD unit comprising one or more hollow fibre tubes; the concentrated UF permeate is passed through the central lumen of the hollow fibres. The RO permeate water is used as the counter current stripping water for the CD unit passing around the outsides of the hollow fibres. Of the 1,700 l/hour stream of concentrated UF permeate entering the CD unit, this is partially desalted on passing through the CD unit; the treated stream leaves the CD unit at a rate of 2,000 l/hour and is then recycled back to an RO unit at a later stage of concentration in the cyclic system. Of the 5,300 l/hour of stripping water entering the CD unit in counter current flow to the stream of concentrated UF permeate, 300 ml crosses the CD barrier to dilute the concentrated UF permeate (i.e., dilution from 1,700 l/hour to 2,000 l/hour) and 5,000 l/hour is channeled or bled off as salty water effluent.

Of the 2,000 l/hour of desalted solution from the CD unit, as indicated above this is passed again through an RO unit yielding 1,500 l/hour of desalted concentrate, and 500 l/hour of permeate (water) which is channeled to the CD unit stripping water and eventually bled off to the drain.

Table I, below, is an example illustrating the results obtained for the treatment of dairy whey UF permeate, using a single hollow fibre CD tube and a single RO tube.

EP 0 313 226 A1

TABLE I

| Whey feed rate (g/min) | Stripping Water feed rate (g/min) | Desalted product rate (g/min) | Effluent rate (g/min) | Product dilution factor | | | Whey feed component concentrations (g/l) | | | | | |
|---|---|---|---|---|---|---|---|---|---|---|---|---|
| | | | | | K | Na | Ca | Mg | Cl | Ash | Lactose | |
| 917.5 | 1874.5 | 1023.5 | 1750.5 | 1.1155 | 4.0238 | 1.0269 | 0.3242 | 0.2058 | 1.9596 | 11.75 | 192.01 | |

| Desalted product components concentrations (g/l) | | | | | | | Effluent component concentrations (g/l) | | | | | |
|---|---|---|---|---|---|---|---|---|---|---|---|---|
| K | Na | Ca | Mg | Cl | Ash | Lactose | K | Na | Ca | Mg | Cl | Lactose |
| 2.3545 | 0.6249 | 0.2601 | 0.1656 | 0.7810 | 7.15 | 156.24 | 0.7189 | 0.1719 | 0.0150 | 0.0057 | 0.4970 | 6.695 |

| Component removal (%) | | | | | | | Separation factors | | | | (% component removal) / (% lactose removal) | |
|---|---|---|---|---|---|---|---|---|---|---|---|---|
| K | Na | Ca | Mg | Cl | Ash | Lactose | K | Na | Ca | Mg | Cl | Lactose |
| 34.41 | 32.12 | 9.68 | 7.79 | 71.27 | 32.12 | 7.94 | 4.44 | 4.00 | 1.23 | 0.96 | 9.55 | 4.05 |

## INDUSTRIAL APPLICABILITY

In general, the present invention is suitable for use in any system where it is required to separate and concentrate two or more species from a solution without the need for the addition of water. The combination of pressure driven processes means and concentration driven process means results in the separation of species by the concentration driven process means and the concentration of the species by the pressure driven process means. Although the example herein relates to a solution comprising a sugar (lactose) and a salt, the invention is equally applicable to the separation of any two species from a solution e.g., copper and nickel from a solution of their salts.

Although the invention has been described above with reference to examples and to preferred embodiments, it will be appreciated that the invention may be embodied in other forms or carried out in other ways without departing from the spirit or essential characteristics thereof. The above description is therefore to be considered as in all respects, illustrative and not restrictive, and all changes which come within the meaning and range of equivalency are intended to be embraced therein.

## Claims

1. A membrane separation and concentration process comprising a combination of at least two distinct membrane separation systems characterized in that the separation capacity achieved and/or the efficiency of separation obtained is greater than that which can be obtained by separate sequential uses of the said separation systems.

2. A membrane separation process as claimed in Claim 1, comprising a combination of pressure-driven membrane separation means and concentration-driven membrane separation means.

3. A membrane separation process as claimed in Claim 2, wherein the pressure-driven membrane separation means is selected from reverse osmosis, nanofiltration or ultrafiltration, and wherein the concentration-driven membrane separation means is selected from counter diffusion or dialysis.

4. A process for the fractionation and concentration of molecular species from a solution containing two or more dissolved molecular species of different molecular weight, wherein said solution is concentrated by a pressure-driven membrane process and fractionated by a concentration-driven membrane process, characterized in that pressure-driven membrane process and said concentration-driven membrane process are operated simultaneously in a closed loop relationship, to provide a concentrate of at least one molecular species from the solution.

5. A process as claimed in Claim 4, wherein:
(a) the pressure-driven membrane separation process is a process whereby a feed solution is treated to produce a concentrate (retentate) and a permeate; and
(b) the concentration-driven membrane separation process is a process whereby an input solution is treated against a counter current stripping stream to produce an output feed fraction;
and wherein the solution containing two or more dissolved molecular species of different molecular weight comprises the feed solution to be concentrated by the pressure-driven membrane separation process, the concentrate (retentate) comprises the input solution for the concentration-driven membrane separation process, and the permeate comprises at least part of the counter current stripping stream.

6. A process as claimed in Claim 4 or Claim 5, wherein the pressure-driven membrane separation process is selected from reverse osmosis, nanofiltration or ultrafiltration, and wherein the concentration-driven membrane separation process is selected from counter diffusion or dialysis.

7. A process as claimed in any one of Claims 4 to 6 for the fractionation and concentration of whey ultrafiltration (UF) permeate wherein the permeate is concentrated by means of a pressure-driven process such as reverse osmosis, and salts are removed therefrom by means of a concentration-driven process such as counter diffusion.

8. A process for the treatment of whey to recover usuable products therefrom, comprising ultrafiltration of said whey and recovery of the permeate therefrom, reverse osmosis and counter diffusion of the whey permeate in a closed loop system to produce desalted whey concentrate, and the drying of the desalted whey concentrate by evaporation to produce whey powder.

9. Whey powder when produced by a process as claimed in Claim 8.

10. Apparatus for the fractionation and concentration of molecular species contained in a solution, characterized in that it comprises pressure-driven membrane separation means linked to concentration-driven membrane separation means in closed loop relationship.

11. Apparatus as claimed in Claim 10, wherein the pressure-driven membrane separation means comprises means for reverse osmosis, nanofiltration or ultrafiltration, and wherein the concentration-driven membrane separation means comprises means for counter diffusion or dialysis.

12. A process for the fractionation and concentration of molecular species from a solution, substantially as hereinbefore described.

13. A process for the treatment of whey as claimed in Claim 8, substantially as hereinbefore described.

14. Apparatus for the fractionation and concentration of molecular species contained in a solution, substantially as hereinbefore described.

## FIGURE. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X | US-A-3 926 797 (C. GIGOU et al.)<br>* claims 1, 6-8; figure 1 * | 1-6, 10 -12, 14 | B 01 D 13/00<br>A 23 C 21/00 |
| Y | PATENT ABSTRACTS OF JAPAN<br>vol. 8, no. 7 (C-204)(1444), 12th<br>January 1984; & JP - A - 58 175 438<br>(SUMITOMO KAGAKU KOGYO K.K.) 14-10-1983<br>* abstract * | 7-9, 13 | |
| Y | DE-B-1 961 885 (MOLKEREIGENOSSENSCHAFT DAHLENBURG GMBH)<br>* claim 1 * | 7-9, 13 | |
| A | DE-A-2 244 999 (STAUFFER CHEMICAL CO.)<br>* claims 2, 7-9 * | 7-9, 13 | |
| A | DE-A-1 954 897 (THE MILK MARKETING BOARD)<br>* claims 1, 11 * | 7-9, 13 | |

**TECHNICAL FIELDS SEARCHED (Int. Cl.3)**

A 23 C 21/00
A 23 J 1/20
B 01 D 13/00
G 01 N 33/04

The present search report has been drawn up for all claims

| Place of search | Date of completion of the search | Examiner |
|---|---|---|
| BERLIN | 15-12-1988 | CORDERO ALVAREZ M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)